# EUROPEAN PATENT APPLICATION

(11) **EP 3 660 114 A1**
(43) Date of publication of application: **03.06.2020**
(21) Application number: 18208434.3
(22) Date of filing: 27.11.2018
(51) Int. Cl.: C09D 129/04, B32B 27/30

(54) **ENHANCED PVOH-BASED BARRIER LAYER COMPOSITION, BARRIER LAYER AND METHODS FOR ITS MANUFACTURE**

(71) Applicant: BillerudKorsnäs AB, 169 27 Solna (SE)
(72) Inventor: Naderi, Ali, 732 33 Arboga (SE)
(74) Representative: Kransell & Wennborg KB

(57) **Abstract**

The barrier properties, measured for example as the oxygen transmission rate (OTR) of a PVOH-based barrier layer, in particular at a high relative humidity conditions (>50% RH), are significantly improved when said PVOH-based layer also comprises a small amount of an interpolymer complex forming agent. Packaging materials employing such layers are particularly suitable for the packaging of sensitive products such as food, beverages and pharmaceuticals.

## Description

### Technical field

The present disclosure relates to the field of packaging materials, and in particular to an enhanced PVOH-based barrier layer and methods for its manufacture, as well as packaging materials comprising said barrier layer and packages made thereof, in particular packages for sensitive products, such as but not limited to food, beverages, and pharmaceuticals.

### Background

The packaging manufacturing industry faces a major challenge to develop concepts that enable the production of packages based on sustainable resources, and which can be produced at significantly lower energy consumption levels than currently is the case. This concerns in particular those segments of industry that produce packaging for sensitive products such as food, beverages and pharmaceuticals.

Currently, these packaging products contain several layers of fossil-based polymers such as polyethylene, and aluminum, which shield the sensitive content from odor, moisture, oxygen and light - in varying ambient conditions (e.g. humidity and temperature). It is interesting to note that even though aluminum constitutes the smallest barrier component in the packaging product, the aluminum accounts for most of the energy that is consumed in the packaging manufacturing process. Efforts to replace these materials are ongoing, but not free from challenges.

Polyvinyl alcohol (PVOH) is a non-ionic water-soluble polymer that possesses attractive properties, such as biodegradability and the ability to form effective barrier layers against grease and oil, including mineral oils. Furthermore, the hydrogen bonds between the hydroxyl groups of the polymer chains together with the semi-crystalline structure of the polymer enable the formation of dense layers, which make PVOH one of the best available polymer-based gas barriers. Finally, PVOH is an approved material for food packaging, in accordance to official regulations such as those issued by the German Bundesinstitut für Risikobewertung (BfR) or the U.S. Food and Drug Administration (FDA); hence, PVOH is a highly attractive material for the packaging industry.

WO 2013/064500 (Johan Larsson and Anders Karlsson) discloses a curtain coatable gas barrier coating composition comprising a polymer and a surfactant, wherein the polymer is selected from a group consisting of polyvinyl alcohol and polysaccharides, or mixtures thereof, wherein said polysaccharides are soluble or dispersable or suspendable in water and the surfactant is a water soluble non-ionic ethoxylated alcohol. WO 2013/064500 also relates to a method for providing a substrate with a gas barrier layer by means of the coating composition, and a coated substrate having at least one gas barrier layer obtained by coating the substrate with the coating composition. Further, WO 2013/064500 relates to a packaging material comprising a coated paperboard coated with the coating composition, and a liquid package comprising such a packaging material.

However, a major impediment for the wider implementation of PVOH as an effective barrier in the packaging industry is the hydrophilicity of the polymer, which gravely diminishes the effectiveness of the barrier at high humidity conditions. The term "high humidity conditions" herein refers to > 50 % relative humidity (RH) or even > 80 % RH.

There are different approaches to addressing this deficiency. It has for example been attempted to improve the barrier properties of PVOH films by adding nanofillers. Nanofillers are particles characterized by high surface areas and high aspect ratios. The high surface areas and aspect ratios are beneficial in barrier applications, since the particles when applied optimally, make the diffusion of the gas molecules through the coating layer more difficult. However, an optimal application (homogeneous distribution) of the nanofiller particles in polymer matrixes is difficult to achieve through industrially relevant, i.e. simple and affordable, processes.

This is explained by the high aspect ratios and surface areas of nanofillers, which lead to severe aggregation of the nanoparticles. Hence, excessive amounts of the nanofiller, such as >> 10% (w/w) based on the amount of the polymer matrix, must be used for achieving attractive gas barrier properties. This shortcoming is problematic, as the stress-points that are caused by the nanofiller aggregates can lead to the deterioration of the mechanical properties of the nano-composite.

Another approach for the improvement of barrier properties of PVOH in humid conditions is the crosslinking of the PVOH polymer chains. This is generally brought about by the mixing of PVOH and a crosslinking agent prior to application of the formulation onto a substrate or a substrate and the subsequent drying. However, as the following citations will demonstrate, this approach often involves the employment of chemicals or processes that are not preferentially used in the pulp and paper industry. More significantly, the improvements that have been achieved by this route are seemingly modest.

There have been indications (see Labuschagne *et al*., 2008) that the gas barrier properties of PVOH could improve by the densification of the amorphous part of the semi-crystalline PVOH layer. The densification of the amorphous parts of the PVOH layer can be achieved through the interpolymer complexation process. This is obtained through the addition of minute amounts of a polymer, which can strongly interact with PVOH through strong hydrogen bonding interactions. Labuschagne *et al.* reported a three-fold improvement in the barrier property upon the addition of 20% (w/w) poly(methyl vinyl ether co-maleic acid) to PVOH. It is noted that the barrier layer was evaluated at 80% RH.

WO 2004/089624 (A.J. Kruger and P.A. Truter) concerns the use of an interpolymer complexation concept. In this application the inventors exemplified their invention with a formulation that on the dry basis consisted of 30% (w/w) poly(methyl vinyl ether co-maleic acid) and 70% (w/w) PVOH. It is interesting to note that the barrier properties improved only three-fold for a 25 µm barrier layer based on the said formulation, which is not an extraordinary achievement.

In a more recent study (Lim *et al*., 2016), the oxygen-barrier and water-resistance properties of poly(vinyl alcohol) blended with poly(acrylic acid) for packaging applications were investigated. Here PVOH was crosslinked using polyacrylic acid through an esterification process, which required the drying of the coating for one hour at 150 °C. The authors reported an improvement of about three times, when the barrier properties were measured at 0% RH.

It remains to make available PVOH-based barrier layers that perform well at high humidity conditions, i.e. at 50 % RH and higher, and which can be produced by processes suitable for industrial application.

### Summary

The present disclosure sets out to address the problems of the prior art, and makes available an improved method for forming a PVOH-based barrier layer, a PVOH-based barrier layer exhibiting excellent properties, packaging materials comprising said layer, as well as packaging products, i.e. packages and in particular packages for sensitive products such as food, beverages and pharmaceuticals.

According to a first aspect, the present disclosure makes available a method for the production of a packaging material comprising a fibre based substrate and a barrier layer based on polyvinyl alcohol (PVOH), said barrier layer capable of inhibiting the migration of gases, vapors and liquids, wherein said PVOH is dissolved in a solvent, mixed with an interpolymer complex forming agent (IPCFA) forming a coating composition, and said coating composition is applied onto said substrate forming a PVOH-based layer, wherein said IPCFA is a water-soluble polymer or co-polymer exhibiting functional groups capable of forming hydrogen bonds with -OH groups of said PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol, or even more preferably 200 kg/mol - 400 kg/mol.

According to an embodiment of said first aspect, said IPCFA is chosen from polyacrylic acid, polyvinyl pyrrolidone, and non-ionic polyacrylamide, or a mixture of two or more thereof.

According to another embodiment, freely combinable with the above aspect and embodiments thereof, the proportion of said IPCFA in relation to PVOH in the coating composition is in the interval of 1 - 5 % (w/w), preferably in the interval of 2 to 3 % (w/w), such as 2.5 % (w/w).

According to another embodiment of said first aspect, freely combinable with the above aspect and embodiments, the PVOH has a weight average molecular weight (M_{w}) in the interval of 10 kg/mol to 500 kg/mol, preferably 50 kg/mol to 300 kg/mol, and more preferably about 80 to 200 kg/mol.

According to a further embodiment of said first aspect, freely combinable with the above aspect and embodiments, said PVOH has a degree of hydrolysis of about 98 to 100%.

According to yet another embodiment of said first aspect, freely combinable with the above aspect and embodiments, said coating composition further comprises a nanofiller, preferably a nanofiller chosen from bentonite, kaolin or montmorillonite.

According to an embodiment thereof, the nanofiller is present in the interval of about 1 to about 50 weight-%, preferably about 5 to about 30 weight-%, and more preferably about 10 to about 20 weight-% based on the weight of the polymeric compounds.

According to a further embodiment of said first aspect, freely combinable with the above aspect and embodiments, said coating composition is applied onto the substrate by curtain coating, blade coating, rod coating, spray or roll coating, or a combination of two or more thereof.

According to another embodiment of said first aspect, freely combinable with the above aspect and embodiments, the coating composition is applied onto the substrate forming a PVOH-based barrier having a coat weight in the interval of 0.8 to 8.0 g/m², preferably 1.2 - 4.0 g/m², and more preferably 1.6 - 3.2 g/m².

According to yet another embodiment of said first aspect, freely combinable with the above aspect and embodiments, said fibre based substrate is a paper or paper board comprising at least one fibre based layer.

According to a further embodiment of said first aspect, freely combinable with the above aspect and embodiments, said PVOH-based layer is dried at a temperature below the boiling point of the solvent.

According to yet another embodiment of said first aspect, freely combinable with the above aspect and embodiments, the method further comprises a heating step wherein said dried PVOH-based layer is heated to a temperature in the interval of 101 - 170 °C, preferably in the interval of 130 to 160 °C and most preferably in the interval of about 140 to about 150 °C.

Said dried PVOH-based layer, optionally after having been subjected to the above heating step, is then crosslinked by subjecting it to a crosslinking agent, and optionally a catalyst, to achieve crosslinking of the polymers. This layer is then dried, again at a temperature below the boiling point of the solvents used, and optionally subjected to a second heating step wherein said dried PVOH-based layer is heated to a temperature in the interval of 101 - 170 °C, preferably in the interval of 130 to 160 °C and most preferably in the interval of about 140 to about 150 °C.

According to another embodiment of said first aspect, freely combinable with the above aspect and embodiments, the resulting crosslinked PVOH-based layer has an oxygen transmission rate (OTR) in the interval 0.01 to 3 ml/m² day atm, preferably in the interval of 0.01 to 0.25 ml/m² day atm, and most preferably 0.01 to 0.1 ml/m² day atm, measured according to ASTM D3985 and at a relative humidity (RH) of 50 %.

According to yet another embodiment of said first aspect, freely combinable with the above aspect and embodiments, said barrier layer has an oxygen transmission rate (OTR) in the interval of 0.1 to 3 ml/m² day atm, preferably in the interval of 0.1 to 2.5 ml/m² day atm, and most preferably 0.1 to 1 ml/m² day atm, measured according to ASTM D3985 also at a relative humidity (RH) of 80 %.

A second aspect of the present disclosure relates to a packaging material comprising a fibre based substrate and a barrier layer based on polyvinyl alcohol (PVOH), said barrier layer inhibiting the migration of gases, vapors and liquids, wherein said barrier layer comprises an interpolymer complex forming agent (IPCFA), wherein said IPCFA is a water-soluble polymer or co-polymer exhibiting functional groups capable of forming hydrogen bonds with OH groups of the PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol, or even more preferably 200 kg/mol - 400 kg/mol.

According to an embodiment of said second aspect, said IPCFA is chosen from polyacrylic acid, polyvinyl pyrrolidone, and non-ionic polyacrylamide, or a mixture of two or more thereof.

According to another embodiment of said second aspect, freely combinable with the above, the proportion of said IPCFA to PVOH in the coating composition is in the interval of 1 to 5 % (w/w), preferably in the interval of 2 to 3 % (w/w).

According to yet another embodiment of said second aspect, freely combinable with the above, said PVOH has a weight average molecular weight (M_{w}) in the interval of 10 kg/mol to 500 kg/mol, preferably 50 kg/mol to 300 kg/mol, and more preferably about 80 kg/mol to 200 kg/mol.

According to a further embodiment of said second aspect, freely combinable with the above, said PVOH has a degree of hydrolysis of about 98 to 100%.

According to another embodiment of said second aspect, freely combinable with the above, said coating composition further comprises a nanofiller, preferably a nanofiller chosen from bentonite, kaolin or montmorillonite.

According to yet another embodiment of said second aspect, freely combinable with the above, the nanofiller is present in the interval of about 1 to about 50 weight-%, preferably about 5 to about 30 weight-%, and more preferably about 10 to about 20 weight-% based on the weight of the polymeric compounds.

According to a further embodiment of said second aspect, freely combinable with the above, said barrier layer has an oxygen transmission rate (OTR) in the interval of 0.01 to 3 ml/m² day atm, measured according to ASTM D3985 and at a relative humidity (RH) of 50 %.

According to another embodiment of said second aspect, freely combinable with the above, said barrier layer has an oxygen transmission rate (OTR) in the interval of 0.1 to 3 ml/m² day atm, measured according to ASTM D3985 also at a relative humidity (RH) of 80 %.

A third aspect of the present disclosure is a package or container comprising a packaging material obtainable through a method according to the first aspect or one or more embodiments thereof, or a packaging material according to the second aspect or one or more embodiments thereof. Said package is preferably a package for an edible product, a foodstuff, a beverage or a pharmaceutical.

Further aspects and embodiments thereof will be apparent to a skilled person upon study of the following claims and the description, including the drawings and examples.

### Short description of the drawing

The aspects and embodiments will be presented in closer detail in the following description and examples and with reference to the attached drawing, in which:
Fig. 1 shows, from left to right, the chemical structures of polyvinyl alcohol, nonionic polyacrylamide, poly(methyl vinyl ether-alt-maleic acid), polyacrylic acid and polyvinyl pyrrolidone, interpolymer complex forming polymers tested in the examples.
Fig. 2 shows the estimated optimum concentrations (% w/w) in PVOH-IPCFA blends identified for four different interpolymer complex forming polymers; polyvinyl pyrrolidone (PVP), polyacrylic acid (PAA), poly(methyl vinyl ether-alt-maleic acid) (PMV), and nonionic polyacrylamide (NPA).
Fig. 3 shows the estimated optimum concentration of PVP in PVOH-PVP blends as a function of the molecular weight of PVP as determined by the optimum in shear viscosity.

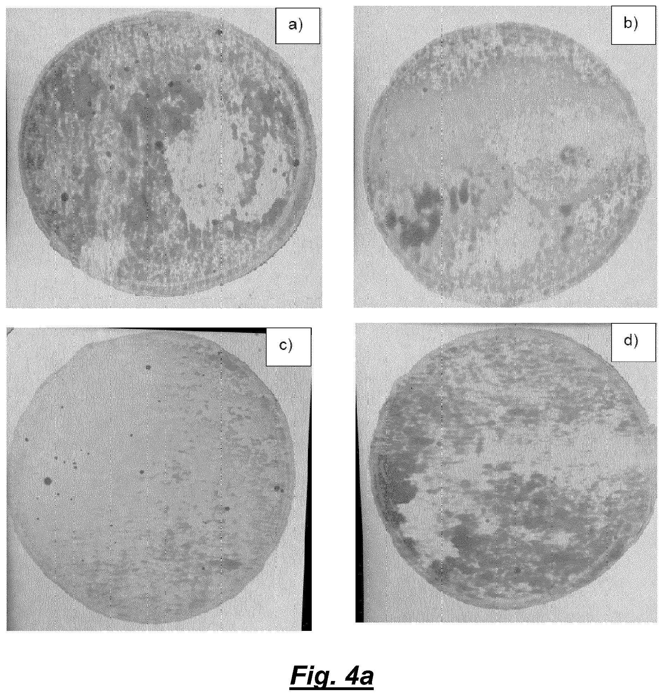

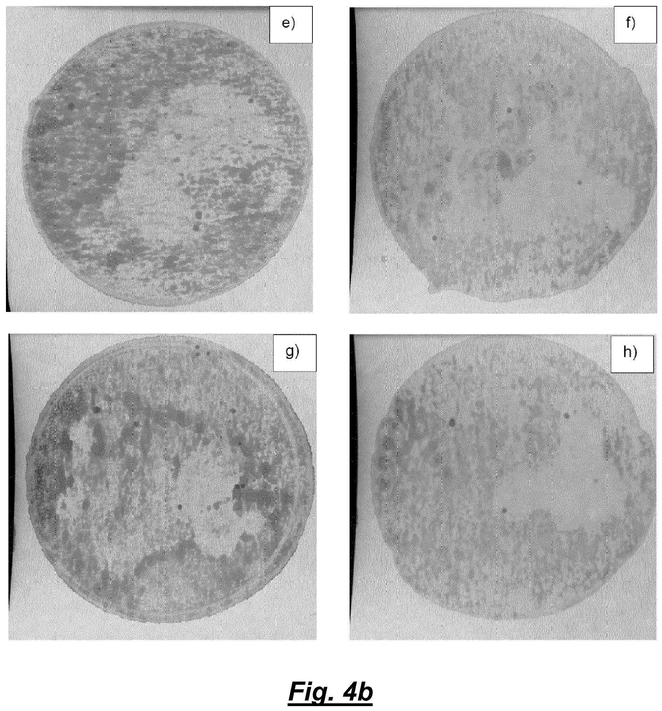

Figs. 4a and b show the pinhole test results of cardboard substrates coated with the experimental coating formulations: a) Pure PVOH; b) PVOH containing 10% (w/w) nanofiller; c) PVOH-PMV (2.5% (w/w)); d) PVOH-PMV (2.5% (w/w)) 10% nanofiller; e) PVOH-PAA (1% (w/w)); f) PVOH-PAA(1% (w/w)) 10% (w/w) nanofiller; g) PVOH-PVV (2.5% (w/w)); and h) PVOH-NPA (2% (w/w)).

### Description

Before the present invention is described, it is to be understood that the terminology employed herein is used for the purpose of describing particular embodiments only and is not intended to be limiting, since the scope of the present invention will be limited only by the appended claims and equivalents thereof.

It must be noted that, as used in this specification and the appended claims, the singular forms "a," "an," and "the" include plural referents unless the context clearly dictates otherwise.

The term "substrate" refers to any substrate for which improved barrier properties are desired, and onto which a PVOH-based coating can be applied. The present disclosure is primarily concerned with cellulose and/or fibre based substrates, such as films or paper including paperboard made of or comprising cellulose, regenerated cellulose, and/or cellulose fibre.

The term "fibre" encompasses cellulose fibre, such as virgin fibre, for example bleached and/or unbleached kraft pulp, or chemithermomechanical pulp (CTMP), but also includes recirculated fibre, pulped recycled paper, such as pulped newsprint, de-inked pulp (DIP) etc. The term "fibre" also encompasses other natural fibres, as well as synthetic fibres of different composition, length and width.

Molecular weight refers to weight average molecular weight (M_{w}) which can be determined using methods well-known to a person skilled in the art, for example gel permeation chromatography (GPC), sometimes also referred to as size exclusion chromatography (SEC). For the principles of molecular weight analysis, see the chapter "Polymer molecular weight measurement" by Maria Guadalupe Neira-Velazquez et al., in Handbook of Polymer Synthesis, Characterization, and Processing, 1st Ed., Eds. E. Saldivar-Guerra and E. Vivaldo-Lima, 2013.

According to a first aspect, the present disclosure makes available a method for the production of a packaging material comprising a substrate and a barrier layer based on polyvinyl alcohol (PVOH), said barrier layer inhibiting the migration of gases, vapors and liquids, wherein said PVOH is dissolved in a solvent, mixed with an interpolymer complex forming agent (IPCFA) forming a coating composition, and said coating composition is applied onto said substrate forming a barrier layer, wherein said IPCFA is a water-soluble polymer or co-polymer exhibiting functional groups capable of forming hydrogen bonds with OH groups of the PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol, or even more preferably 200 kg/mol - 400 kg/mol.

Interpolymer complexes are formed by the association of various macromolecules and can be grouped into four major categories depending on the dominant type of interaction:
1) Stereocomplexes formed by interaction through van der Waals forces;
2) Polyelectrolyte (or polymeric) complexes formed by interactions between macromolecular polyacids and polybases or their salts stabilized by ionic bonds;
3) Coordination complexes; and
4) Complexes formed by hydrogen bonding.

In general, in aqueous solutions of mixtures of such complementary polymers, interpolymer association due to successive hydrogen bonding between the carboxylic or amide groups of the polyacid and the proton acceptor groups of the polybase leads to the formation of compact interpolymer complexes resulting from the cooperative hydrogen-bonding interaction that induces the mutual screening of hydrophilic parts of the interacting macromolecules.

Without wishing to be bound by theory, the present inventor concludes - based on his experiments - that the interpolymer complexation results in improved barrier properties due to the densification of the resulting barrier layer. Further, also based on the experience of the present inventor, said IPCFA is chosen from polyacrylic acid, polyvinyl pyrrolidone, and non-ionic polyacrylamide, or a mixture of two or more thereof. The experimental results obtained so far indicate that all these are useful as IPCFA:s but that polyacrylic acid, polyvinyl pyrrolidone are more effective than non-ionic polyacrylamide. Also poly(methyl vinyl ether-alt-maleic acid) can be used, exhibiting properties similar to polyacrylic acid and polyvinyl pyrrolidone. Other IPCFA:s combinable with PVOH are for example poly(ethylene glycol), poly(sodium L-glutamate), poly(styrene sulfonic acid) sodium salt, carboxymethyl cellulose, and poly(methacrylic) acid.

According to another embodiment, freely combinable with the above aspect and embodiments, the proportion of said IPCFA in relation to PVOH in the coating composition is in the interval of 1 - 5 % (w/w), preferably in the interval of 2 to 3 % (W/W), such as 2.5 % (w/w). This is a surprisingly small amount, in particular when compared to previous publications teaching the addition of about 30 % of interpolymer complex forming polymers.

According to a further embodiment of said first aspect, freely combinable with the above aspect and embodiments, said PVOH has a degree of hydrolysis of at least about 98% or in the interval of about 98 to 100%. Further, fully saponified grades of PVOH are preferably used. Different qualities of PVOH having a degree of hydrolysis of about 98 - 100 % are available, for example products having the following M_{w}: 13-23 kg/mol, 27 kg/mol, 31-50 kg/mol, 89-98 kg/mol, 85-124 kg/mol, 125 kg/mol, 130 kg/mol, 145 kg/mol, 146-186 kg/mol, and 195 kg/mol.

Again without wishing to be bound by theory, the present inventor contemplates that the molecular weight of the PVOH, as well as that of the IPCFA, and the combinations thereof, have significance. Thus, according to another embodiment of said first aspect, freely combinable with the above aspect and embodiments, the PVOH has a weight average molecular weight (M_{w}) in the interval of 10 kg/mol to 500 kg/mol, preferably 50 kg/mol to 300 kg/mol, and more preferably about 80 kg/mol to 200 kg/mol.

PVOH-products are frequently characterized by the viscosity of a 4 % solution. A skilled person is well familiar with different standard methods for determining the viscosity of polymers, for example using a capillary-type viscosimeter, for example an Ubbelohde-type viscometer or an Ostwald-type viscosimeter.

Thus, according to a further embodiment of said first aspect, freely combinable with the above aspect and embodiments, the viscosity of the PVOH is preferably in the interval of about 4 to 28 mPas as determined at 20 °C according to the standard DIN 53015 / JIS K 6726, preferably above 5 mPas as PVOH products having a viscosity above 5 mPas have obtained FDA /BfR approval for use in food packaging applications.

According to yet another embodiment of said first aspect, freely combinable with the above aspect and embodiments, said coating composition further comprises a nanofiller, preferably a nanofiller chosen from bentonite, kaolin or montmorillonite.

According to an embodiment thereof, the nanofiller is present in the interval of about 1 to about 50 weight-%, preferably about 5 to about 30 weight-%, and more preferably about 10 to about 20 weight-% based on the weight of the polymeric compounds. The experimental results indicate that that combined used of an IPCFA and a nanofiller not only makes it possible to reduce the amount of both components, but also has a positive effect in that the formation of pinhole defects is diminished. The reduction of the amount of nanofillers, made possible by the inclusion of IPCFA:s in the composition is advantageous also because it reduces the risk of the barrier layer being perceived as brittle, a property sometimes associated with nanofillers.

While a nanofiller-free barrier layer is desired for most applications, the possibility of combining IPCFA:s and a reduced amount of nanofillers is desirable in some applications. When coating three-dimensional objects, or substrates that are required to be flexible in the subsequent packaging applications, in the filling, closure or other handling steps, where the flexibility and durability of the barrier layer is very important, it will be a considerable advantage if the content of nanofillers can be minimized or entirely avoided.

According to a further embodiment of said first aspect, freely combinable with the above aspect and embodiments, said coating composition is applied onto the substrate by curtain coating, blade coating, rod coating, spray or roll coating, or a combination of two or more thereof.

A person skilled in the relevant art is familiar with the techniques for coating substrates, in particular fibre based substrates such as paperboards. Curtain coating is a coating process in which a linear flow of a liquid coating composition is deposited on a surface of a moving substrate, such as paper web. The coating composition forms a liquid sheet that falls freely before impinging onto the moving substrate that is to be coated.

According to another embodiment of said first aspect, freely combinable with the above aspect and embodiments, the coating composition is applied onto the substrate forming a PVOH-based barrier having a coat weight in the interval of 0.8 to 8.0 g/m², preferably 1.2 - 4.0 g/m², and more preferably 1.6 - 3.2 g/m².

According to yet another embodiment of said first aspect, freely combinable with the above aspect and embodiments, said substrate is a fibre based substrate such as paper or paper board comprising at least one fibre based layer.

According to a further embodiment of said first aspect, freely combinable with the above aspect and embodiments, said PVOH-based layer is dried at a temperature below the boiling point of the solvent, for example air dried using hot air, xenon flash heating, UV radiation, IR radiation, microwaves, or convection heating or the like.

According to yet another embodiment of said first aspect, freely combinable with the above aspect and embodiments, the method further comprises a heating step wherein said dried barrier layer is heated to a temperature in the interval of about 101 to about 170 °C, preferably about 130 - 160 °C, or more preferably about 140 to about 150 °C. This additional heating step can be performed for 1 to 10 s, or for 1 to 3 minutes. Different methods of heating can be employed, such as hot air, xenon flash heating, UV radiation, IR radiation, microwaves, or convection heating.

Said dried PVOH-based layer, optionally after having been subjected to the above heating step, is then crosslinked by subjecting it to a crosslinking agent, and optionally a catalyst, to achieve crosslinking of the polymers. This layer is then dried, again at a temperature below the boiling point of the solvents used, and optionally subjected to a second heating step wherein said dried PVOH-based layer is heated to a temperature in the interval of 101 - 170 °C, preferably in the interval of 130 to 160 °C and most preferably in the interval of about 140 to about 150 °C.

The resulting crosslinked layer exhibits significantly improved properties, in particular at high humidity conditions, such as 50 % RH or higher. Thus, according to another embodiment of said first aspect, freely combinable with the above aspect and embodiments, said barrier layer has an oxygen transmission rate (OTR) in the interval 0.01 to 3 ml/m2 day atm, measured according to ASTM D3985 and at a relative humidity (RH) of 50 %.

According to yet another embodiment of said first aspect, freely combinable with the above aspect and embodiments, said barrier layer has an oxygen transmission rate (OTR) in the interval of 0.1 to 3 ml/m² day atm, measured according to ASTM D3985 also at a relative humidity (RH) of 80 %.

The method has proven to be very robust, and the inventor has for example shown that the coating composition and crosslinking compositions can be prepared in tap water, which constitutes an advantage when the method is applied in an industrial scale.

A second aspect of the present disclosure relates to a packaging material comprising a fibre based substrate and a barrier layer based on polyvinyl alcohol (PVOH), said barrier layer inhibiting the migration of gases, vapors and liquids, wherein said barrier layer comprises an interpolymer complex forming agent (IPCFA), wherein said IPCFA is a water-soluble polymer or co-polymer exhibiting functional groups capable of forming hydrogen bonds with OH groups of the PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol or even more preferably 200 kg/mol - 400 kg/mol.

According to an embodiment of said second aspect, said IPCFA is chosen from polyacrylic acid, polyvinyl pyrrolidone, and non-ionic polyacrylamide, or a mixture of two or more thereof.

According to another embodiment of said second aspect, freely combinable with the above, the proportion of said IPCFA to PVOH in the coating composition is in the interval of 1 to 5 % (w/w), preferably in the interval of 2 to 3 % (W/W), such as 2.5 % (w/w).

According to a further embodiment of said second aspect, freely combinable with the above, said PVOH has a degree of hydrolysis of about 98 to 100%. Different qualities of PVOH having a degree of hydrolysis of about 98 - 100 % are available, for example products having the following M_{w}: 13-23 kg/mol, 27 kg/mol, 31-50 kg/mol, 89-98 kg/mol, 85-124 kg/mol, 125 kg/mol, 130 kg/mol, 145 kg/mol, 146-186 kg/mol, and 195 kg/mol.

According to yet another embodiment of said second aspect, freely combinable with the above, said PVOH has a weight average molecular weight (M_{w}) in the interval of 10 kg/mol to 500 kg/mol, preferably 50 kg/mol to 300 kg/mol, and more preferably about 80 kg/mol to 200 kg/mol.

PVOH-products are frequently characterized by the viscosity of a 4 % solution. A skilled person is well familiar with different methods for determining the viscosity of polymers, for example using a capillary-type viscosimeter, for example an Ubbelohde-Type viscometer or an Ostwald-type viscosimeter. Notably PVOH products having a viscosity above 5 mPas have obtained FDA / BfR approval.

According to another embodiment of said second aspect, freely combinable with the above, said coating composition further comprises a nanofiller, preferably a nanofiller chosen from bentonite, kaolin or montmorillonite.

According to yet another embodiment of said second aspect, freely combinable with the above, the nanofiller is present in the interval of about 1 to about 50 weight-%, preferably about 5 to about 30 weight-%, and more preferably about 10 to about 20 weight-% based on the weight of the polymeric compounds. A reduced amount of filler is contemplated for applications where the coated substrate is required to be flexible, for example bendable, with preserved integrity of the barrier layer. The combined use of an IPCFA and a nanofiller makes it possible to minimize the amount of nanofiller, thus avoiding problems such as brittleness, often associated with barrier layers comprising nanofillers.

An important advantage is that the resulting barrier layer exhibits significantly improved properties, in particular at high humidity conditions, such as 50 % RH or higher. So, according to a further embodiment of said second aspect, freely combinable with the above, said barrier layer has an oxygen transmission rate (OTR) in the interval 0.01 to 3 ml/m² day atm, preferably in the interval of 0.01 to 0.25 ml/m² day atm, and most preferably 0.01 to 0.1 ml/m² day atm, measured according to ASTM D3985 and at a relative humidity (RH) of 50 %.

According to another embodiment of said second aspect, freely combinable with the above, said barrier layer has an oxygen transmission rate (OTR) in the interval of 0.1 to 3 ml/m² day atm, preferably in the interval of 0.1 to 2.5 ml/m² day atm, and most preferably 0.1 to 1 ml/m² day atm, measured according to ASTM D3985, also at a relative humidity (RH) of 80 %.

A third aspect of the present disclosure is a package or container comprising a packaging material obtainable through a method according to the first aspect or one or more embodiments thereof, or a packaging material according to the second aspect or one or more embodiments thereof. Said package is preferably a package for an edible product, a foodstuff, a beverage or a pharmaceutical.

### Examples

The inventors have performed extensive experimental work using a non-modified PVOH layer as reference, obtaining improved barrier properties at high relative humidity.

### Materials

PET-plastic films were used as the substrate or substrate for film forming in this experimental set-up.

KURARAY POVAL® 15-99 (Kuraray America Inc.) was used as the PVOH in the experiments. This polymer has a degree of hydrolysis of 99% and a viscosity of 12.5 - 17.5 mPa.s (measured at 4% (w/w)).

Other components were:
CLOISITE®-Na+ (Southern Clay Products / BYK Additives & Instruments), which is a micro-granulated nanofiller.
LUTENSOL® ON70 (BASF / BTC Europe GmbH) a fatty alcohol ethoxylate. Nonionic polyacrylamide with Mₙ of about 40 kg/mol and 150 kg/mol (NPA) corresponding to M_{w} about 74 kg/mol and 400 kg/mol, from Sigma Aldrich.

Poly(methyl vinyl ether-alt-maleic acid) with Mn of about 960 kg/mol (PMV_{high}) and 80 kg/mol (PMV_{low}) corresponding to M_{w} about 1980 kg/mol and 216 kg/mol, was kindly provided by Ashland Global Specialty Chemicals Inc.

Tap water was used in all experiments.

### Methods

### 1. Preparation of polymer solutions in laboratory scale (for rheological studies)

The PVOH-PMV solutions were prepared by adding the polymers to water under continuous stirring at room temperature, prior to heating for one hour at 95 °C.

PVOH-NPA solutions were prepared by first preparing stock solutions of the different polymers. PVOH (ca 9% (w/w)) was prepared by mixing at 95 °C for one hour, and NPA stock solution (1% (w/w)) was prepared through continuous stirring overnight at room temperature. The NPA was added to the PVOH solution at 60 °C under stirring. The system was thereafter removed from the heater and stirred for an additional period often minutes.

PVOH-PMV solutions were prepared by first preparing stock solutions of PMV. These were produced at 8 % (w/w) consistency by mixing the polymer at 95 °C for one hour. The PMV stock solution was thereafter mixed with a water solution of PVOH at room temperature, the temperature raised to 95 °C and the suspension stirred for one hour.

### 2. Preparation of polymer solutions in laboratory scale (for barrier studies)

A similar protocol as in the previous section was employed for the preparation of the polymer blends. However, in the studies in which nanofiller (CLOISITE®-Na+) was employed, the nanofiller was first dispersed in water during ten minutes, before the addition of the polymers and subsequent heating. LUTENSOL® NO70 (10% based on the weight of the polymer/s) was added to the polymer blends at 40 °C.

### 3. Preparation of polymer solutions in semi-pilot scale (for barrier studies)

An industrial boiling kettle with a capacity of 50 liters was employed. The preparation of the different polymer blends was conducted in a similar manner as described above. The amount of LUTENSOL® NO70 was 0.4 % w/w in the curtain coating formulations. The optimal amount of LUTENSOL® for each of the polymer blends was not investigated.

### 4. Coating of the substrate with PVOH-based formulations

In laboratory scale experiments, the polymeric solutions were applied on the plastic substrate by a laboratory rod-coater. The grammage was about 3 g/m2. The coating was thereafter dried by IR.

In a semi-pilot scale set-up, the coating was performed using a laboratory-scale curtain coater. The conveyer speed was about 6.5 m/s and the pumping rate about 3 l/min. The grammage of the films was about 3 g/m2. The resulting coated substrates were dried at 60 °C for 20 min in a laboratory oven.

### 5. Rheological studies

The shear viscosity of each polymer suspension was measured at 25 °C using a rheometer (TA Instruments Ltd., Delaware, USA) with bob and cup geometry (smooth surfaces). The viscosities were in the range of 10 - 1000 s⁻¹.

### 6. Barrier properties

The OTR (measured at 80% RH/23 °C) of the coated films were measured using an OX-TRAN® instrument from Mocon Inc. according to ASTM D3985. The oxygen permeation rates (OP) of the different systems were calculated by normalization of the measured OTR values with the thickness of the coating. Preliminary thickness values (about 1 to 2 µm) were obtained by SEM measurements.

### 8. Evaluation with regard to pinholes

The brown side of Duplex 370 carton board (BillerudKorsnäs AB, Sweden) was coated with the experimental compositions using curtain coating. The pinhole test was performed according to the INS-06271-v.2.0 protocol.

### Results

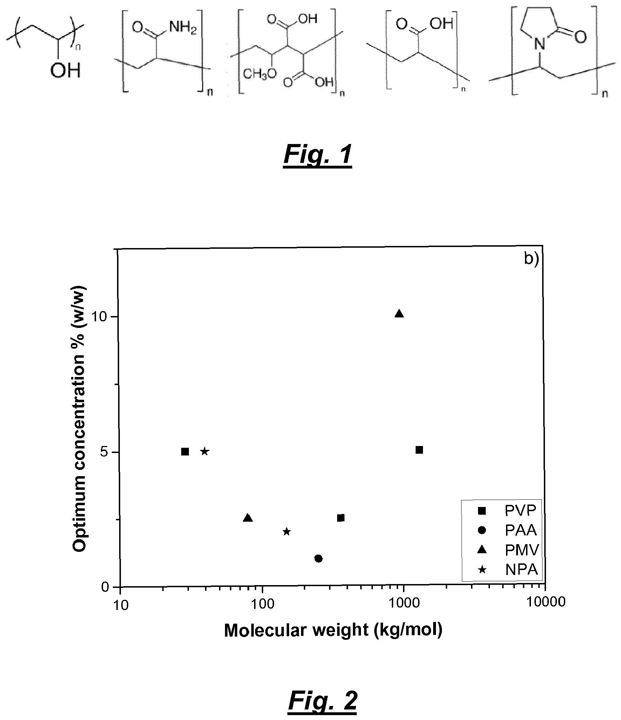

The optimum compositions of PVOH and different IPCFA:s were identified by rheological studies. The optimum concentrations of different polymers are presented in Fig. 2, showing that it is possible to use 10 % or less within the molecular weight interval of 10 kg/mol to 1000 kg/mol and indicating that the concentration of IPCFA:s can be further minimized when using polymers of a weight average molecular weight (M_{w}) in the interval of 30 kg/mol to 700 kg/mol or preferably 50 kg/mol - 500 kg/mol.

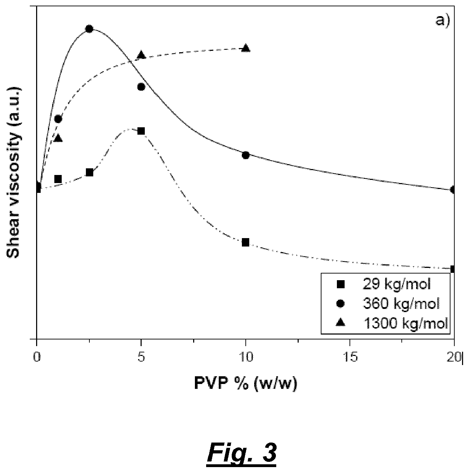

The shear viscosities of PVP as a function of molecular weight and concentration of PVP in PVOH-PVP compositions are shown in Fig. 3. The optimum in the viscosity curve is shifted to higher values from about 2.5 % (w/w) as a function of PVP content when the molecular weight is decreased or increased by about one order of magnitude, from 360 kg/mol to 29 kg/mol or from 360 kg/mol to 1300 kg/mol.

The impact of molecular weight (> 100 kg/mol) on the optimum concentrations of NPA and PAA was evaluated. No plateauing tendency was observed for these polymers due to the massive and continuous increase of the viscosity of the polymer blends. Fig. 2 and 3, together with the observations made during the experiments indicate a continuous decrease of viscosity as a function of the amount of polymer in the blend. Without wishing to be bound by theory, the inventor speculates that this may be due the absence of effective interactions between the PVOH and the smaller NPA, which may be understood as the high entropic penalty arising when smaller entities are confined by association or adsorption. This leads to the decrease of the total viscosity of the system, which is a function of the relative amounts and viscosities of the different components.

This observation and the tendencies that can be seen in Figs. 2 and 3 indicate that the molecular weight of the IPCFA:s should be in the interval of 10 kg/mol to 1000 kg/mol, or in the order of 50 - 500 kg/mol to simultaneously make it possible to minimize the amount of these polymers in the coating compositions. It was surprisingly found that minimizing the amounts of the IPCFA:s was beneficial to the barrier properties of the coated layers.

Based on the above, the investigations focused on IPCFA:s having weight average molecular weights (M_{w}) around 100 kg/mol. Table 1 presents the OTR of coated films prepared in laboratory scale experiments by rod coating (rod), and the OTR of selected systems produced in semi-pilot scale by curtain coating (cur). Based on the optimization of the IPCFA, the polymers were used in the following amounts: PMV about 2.5 % (w/w), NPA about 2 % (w/w), PAA about 1 % (w/w) and PVP about 2.5 % (w/w). The comparison of OTR_{rod} and OTR_{cur} indicates similar trends, that is that the barrier properties are improved by the inclusion of small amounts of IPCFA. The pH was adjusted in a number of experiments, and the pH values indicated with "*" are the actual pH of the system without pH-adjustment.

**Table 1. OTR of coated films**

| **Barrier composition** | **pH** | **OTRrod (ml/m² day atm)** | **Thickness (µm)** | **OTRcur (ml/m² day atm)** | **Thickness (µm)** |
|---|---|---|---|---|---|
| PVOH | 7* | 10 | 1.8 | 11 | 1.6 |
| PVOH 10% (w/w) nanofiller | 7* | 7 | 1.8 | 12 | 1.6 |
| PVOH-PMV_{low} | 4* | 5 | 1.8 | 5 | 1.7 |
| PVOH-PMV_{low} | 3 | - | | 9 | 1.7 |
| PVOH-PMV_{low} | 5 | - | | 9 | 1.6 |
| PVOH-PMV_{low} 10% (w/w) nanofiller | 5* | 2 | 1.9 | 5 | 1.6 |
| PVOH-PMV_{low} 10% (w/w) nanofiller | 4 | - | | 10 | |
| PVOH-NPA | 7* | 6 | 1.3 | 8 | |
| PVOH-NPA 10% (w/w) nanofiller | 7* | 8 | 1.5 | - | |
| PVOH-PAA | 5* | - | | 5 | |
| PVOH-PAA 10% (w/w) nanofiller | 5.5* | - | | 4 | |
| PVOH-PVP | 7* | - | | 5 | |
| PVOH-PVP 10% (w/w) nanofiller | 7* | - | | 9 | |

The results in Table 1 indicate that adjustment of the pH has no detectable positive impact on the barrier of systems based on charged polyelectrolytes. Furthermore, the comparison of nanofiller-free systems (which contain an optimal amount of the interpolymer complexing polymer) suggests the following potency in improving the barrier: PAA ≈ PVP ≈ PMV > NPA. There are also preliminary indications using NPA that an increased amount of IPCFA (> 5 % w/w) is needed when using low M_{w} NPA (< 40 kg/mol). Similarly, for PVP, adding > 5 % w/w IPCFA allows the use of low M_{w} (<30 kg/mol) PVP. Conversely, when the molecular weight of the polymer increases above a certain level, for example into the interval of 100 kg/mol - 600 kg/mol, or 200 kg/mol - 400 kg/mol, the amount of IPCFA can be reduced.

When evaluating the results, it should also be kept in mind that the coating thickness was in the order of 1 - 2 µm. It should also be emphasized that the experimental methods have not been fully optimized, and the properties of the barrier layers have been determined when testing the layers individually, and not in a sandwich construction as they would be used in the packaging industry. Depending on the requirements of the specific packaging, various barrier layers can be combined, for example layer with good moisture barrier properties can be used to protect a layer with good oxygen barrier properties, but with lower resistance to moisture. While the aim of the present disclosure is however to make available a barrier layer with improved oxygen barrier properties also at high moisture conditions, such layers can of course be used in combination with other layers.

The results indicate that highly desirable barrier properties, in particular barrier properties at high relative humidity, can be achieved by a process which is well suited for industrial application. Further, the use of nanofillers and interpolymer complexation agents can be minimized. It may also be possible to produce barrier layers which do not need to be covered with additional protecting layers, which is required in many competing processes.

Without further elaboration, it is believed that a person skilled in the art can, using the present description, including the examples, utilize all aspects of the present invention to their fullest extent. Also, although these aspects have been described herein with regard to their preferred embodiments, which constitute the best mode presently known to the inventors, it should be understood that various changes and modifications as would be obvious to one having the ordinary skill in this art may be made without departing from the scope which is set forth in the claims appended hereto.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

### References

WO 2004/089624 - Packaging; Arnoldus J. Kruger and Patricia A. Truter WO 2013/064500 - Coating composition, a method for coating a substrate, a coated substrate, a packaging material and a liquid packaging; Johan Larsson and Anders Karlsson
Labuschagne PW, Germishuizen WA, C. Verryn SM, Moolman FS (2008), Improved oxygen barrier performance of poly(vinyl alcohol) films through hydrogen bond complex with poly(methyl vinyl ether-co-maleic acid), European Polymer Journal 44:2146-2152 doi:https://doi.org/10.1016/j.eurpolymj.2008.04.015
Lim M, Kim D, Seo J (2016), Enhanced oxygen-barrier and water-resistance properties of poly(vinyl alcohol) blended with poly(acrylic acid) for packaging applications, Polymer International 65:400-406 doi:10.1002/pi.5068

## Claims

1. A method for the production of a packaging material comprising a fibre based substrate and a barrier layer based on polyvinyl alcohol (PVOH), said barrier layer inhibiting the migration of gases, vapors and liquids, wherein said PVOH is dissolved in a first solvent, mixed with an interpolymer complex forming agent (IPCFA) forming a coating composition, and said coating composition is applied onto said substrate forming a PVOH-based layer, **characterized in that** said IPCFA is a water-soluble polymer or co-polymer exhibiting functional groups capable of forming hydrogen bonds with -OH groups of the PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol.

2. The method according to claim 1, wherein said IPCFA is chosen from polyacrylic acid, polyvinyl pyrrolidone, and non-ionic polyacrylamide, or a mixture of two or more thereof.

3. The method according to any one of claims 1 - 2, wherein the proportion of said IPCFA in relation to PVOH in the coating composition is in the interval of 1 - 5 % (w/w).

4. The method according to any one of the claims above, wherein said PVOH has a weight average molecular weight (M_{w}) in the interval of 10 kg/mol to 500 kg/mol, preferably 50 kg/mol to 300 kg/mol, and more preferably about 80 kg/mol to 200 kg/mol.

5. The method according to any one of the claims above, wherein said fibre based substrate is a paper or paper board comprising at least one fibre based layer.

6. The method according to any one of the claims above, wherein said barrier layer is dried at a temperature below the boiling point of said first solvent producing a dried PVOH-based layer.

7. The method according to any one of the claims above, wherein said PVOH-based layer is crosslinked by subjecting it to a crosslinking agent to achieve crosslinking of the polymers subsequent to drying and optionally a heating step.

8. The method according to any one of the claims above, wherein said barrier layer has an oxygen transmission rate (OTR) in the interval 0.01 to 3 ml/m² day atm, measured according to ASTM D3985 and at a relative humidity (RH) of 50 %.

9. The method according to any one of the claims above, wherein said barrier layer has an oxygen transmission rate (OTR) in the interval of 0.1 to 3 ml/m² day atm, measured according to ASTM D3985 and at a relative humidity (RH) of 80 %.

10. A packaging material comprising a substrate and a barrier layer based on polyvinyl alcohol (PVOH), said barrier layer inhibiting the migration of gases, vapors and liquids, wherein said barrier layer comprises an interpolymer complex forming agent (IPCFA), **characterized in that** said IPCFA is a water-soluble polymer or co-polymer exhibiting functional groups capable of forming hydrogen bonds with -OH groups of the PVOH, said IPCFA having a weight average molecular weight (M_{w}) in the interval of 10 kg/mol to 1000 kg/mol, preferably in the interval of 30 kg/mol to 700 kg/mol, and most preferably in the interval of 50 kg/mol to 500 kg/mol.

11. The packaging material according to claim 10, wherein said IPCFA is chosen from polyacrylic acid, polyvinyl pyrrolidone, and non-ionic polyacrylamide, or a mixture of two or more thereof.

12. The packaging material according to any one of claims 10 - 11, wherein the proportion of said IPCFA to PVOH in the coating composition is in the interval of 1 to 5 % (w/w).

13. The packaging material according to any one of claims 10 - 12, wherein said PVOH has a weight average molecular weight (M_{w}) in the interval of 10 kg/mol to 500 kg/mol, preferably 50 kg/mol to 300 kg/mol, and more preferably about 80 kg/mol to 200 kg/mol.

14. The packaging material according to any one of claims 10 - 13, wherein said barrier layer has an oxygen transmission rate (OTR) in the interval 0.01 to 3 ml/m² day atm, measured according to ASTM D3985 and at a relative humidity (RH) of 50 %.

15. The packaging material according to any one of claims 10 - 14, wherein said barrier layer has an oxygen transmission rate (OTR) in the interval of 0.1 to 3 ml/m² day atm, measured according to ASTM D3985 and at a relative humidity (RH) of 80 %.
